# EUROPÄISCHE PATENTSCHRIFT

(11) **EP 4 014 727 B1**
(45) Veröffentlichungstag und Bekanntmachung des Hinweises auf die Patenterteilung: **26.07.2023**
(21) Anmeldenummer: 21213395.3
(22) Anmeldetag: 09.12.2021
(51) Int. Cl.: A01J 25/16, A01J 27/00

(54) **SCHMIERVORRICHTUNG ZUM SCHMIEREN DER JÄRBSEITEN VON KÄSELAIBEN**
SMEARING DEVICE FOR SMEARING THE SIDES OF CHEESE WHEELS
DISPOSITIF DE LAVAGE PERMETTANT DE LAVER LES TALONS DES MEULES DE FROMAGE

(30) Priorität: 21.12.2020 CH 16382020
(43) Veröffentlichungstag der Anmeldung: 22.06.2022
(73) Patentinhaber: Kaesaro AG, 9444 Diepoldsau (CH)
(72) Erfinder: Lässer, Franz, 9444 Diepoldsau (CH); Nussbaumer, Hanno, 6845 Hohenems (AT)
(74) Vertreter: Gachnang AG Patentanwälte

(56) Entgegenhaltungen:
- EP-A1- 0 120 811
- CH-A5- 677 861
- FR-A1- 2 403 019

## Beschreibung

Die Erfindung bezieht sich auf eine Schmiervorrichtung zum Schmieren der Järbseiten von Käselaiben nach dem Oberbegriff des Anspruchs 1.

Bei der Käseherstellung wird Käsebruch in Formen gepresst und anschliessend werden die Käselaibe nebeneinander auf Käsebrettern in Lagern gereift. Während dieser Lagerung werden die Käselaibe regelmässig gewendet, so dass die grossen parallel verlaufenden Aussenflächen abwechselnd als Käseoberseite und Käseunterseite wahrgenommen werden. Die Aussenfläche eines Käselaibs wird von der Käseoberseite, der Käseunterseite und einer Järbseite gebildet, wobei die Järbseite die Käseoberseite mit der Käseunterseite verbindet. Die Järbseite wird auch als Käserand bezeichnet. Bei den meisten Käsen ist der Umfang der Ober- und Unterseite kreisförmig. Für Raclette oder andere Käse wird auch ein quadratischer Umfang gewählt, so dass diese Käselaibe zum Schneiden von flachen Stücken besser geeignet sind.

Zum Erzielen einer gewünschten Reifung und einer härteren Oberfläche, bzw. einer Käserinde, wird die jeweilige Oberseite und die Järbseite mittels Bürsten mit einer 200723EP / 29.11.2021 vorzugsweise salzhaltigen Flüssigkeit behandelt. Diese Behandlung wird als Schmieren bezeichnet.

Wenn beispielsweise Käselaibe 7kg schwer sind und während einer 15 Monate langen Reifezeit anfänglich täglich, später weniger oft, gewendet und abgerieben bzw. geschmiert werden, so ergibt sich für das Wenden und für das Schmieren ein grosser Arbeitsaufwand, der möglichst weitgehend mit Anlagen durchgeführt wird. Es gibt Anlagen mit stationären und solche mit mobilen Vorrichtungen zum Behandeln, bzw. Wenden und/oder Schmieren, von Käselaiben.

Bei stationären Vorrichtungen sind Holzbretter mit Käselaiben in sogenannten Horden zusammengestellt und die Horden oder aus den Horden entnommene Stapel mit Brettern und Käselaiben werden beispielsweise von selbstfahrenden Transportgeräten zu einer stationären Vorrichtung transportiert. Nach der Behandlung der Käselaibe werden die Horden oder die Stapel wieder in den ihnen zugeordneten Lagerbereich transportiert.

Bei einer selbstfahrenden Vorrichtung zum Behandeln von Käselaiben bewegt sich die Vorrichtung durch Lagergassen und behandelt bei der jeweils aktuellen Position seitlich der Gasse gelagerte Käselaibe. Die seitlich der Gasse auf Käsebrettern gelagerten Käselaibe werden auf den Käsebrettern von einer Fördereinrichtung zur Vorrichtung zum Behandeln gebracht und dann behandelt. Nach der Behandlung bringt die Fördereinrichtung die Bretter mit den Käselaiben wieder in eine Lagerposition. Wenn in der aktuellen Position der selbstfahrenden Vorrichtung die von der Steuerung zum Behandeln vorgesehenen Käselaibe behandelt sind, bewegt sich die selbstfahrende Vorrichtung zur nächsten Position mit gelagerten Käselaiben und behandelt diese. Wenn die zum Behandeln vorgesehenen Käselaibe einer Gasse behandelt sind, kann die selbstfahrende Vorrichtung in einer nächsten Gasse eingesetzt werden.

EP 1 941 794 B1 zeigt ein Pflegegerät, welches seitlich einzelne Käselaibe aus einem Regal entnimmt, wendet und zur weiteren Behandlung auf einen Tisch legt.

CH 420 714 beschreibt ein mobiles Pflegegerät, das einzelne grosse, runde Käselaibe mit einem Gabelstapler von einer Regalfläche anhebt, aus dem Regal zieht, um eine Staplerachse dreht und über eine Wendevorrichtung auf eine Oberfläche eines drehbaren Behandlungstisches einer Schmiereinrichtung bringt. Seitlich am Tischgestell ist eine Parallelogramm-Verbindung angeordnet, die zu einer vertikal nach oben stehenden, ersten Bürste führt. Die erste Bürste wird von einer Feder an den in der Draufsicht kreisförmigen Umfangsrand des auf dem drehbaren Behandlungstisch liegenden runden Käselaibs gepresst und folgt dem Umfangsrand, bzw. der Järbseite, auch dann, wenn der Käselaib nicht genau konzentrisch auf dem drehenden Behandlungstisch liegt. Über ein Schwenkgelenk ist an der ersten Bürste eine zweite Bürste befestig, welche mit Ihrem Eigengewicht auf der Käseoberfläche aufliegt. Die unter anderem von der Anpresskraft abhängige Schmierwirkung der Bürsten kann nur durch den Austausch der Bürsten, der Parallelogramm-Verbindung oder der Feder angepasst werden. Der Kontakt zwischen der nach oben stehenden, ersten Bürste und dem Umfangsrand, bzw. der Järbseite, hängt aufgrund der Verbindung zwischen den beiden Bürsten auch von der zweiten Bürste ab. Zudem kann gleichzeitig nur ein Käselaib, und zwar ein in der Draufsicht runder Käselaib geschmiert werden.

WO 2012/172506 A1 beschreibt eine selbstfahrende Vorrichtung, bei der eine kombinierte Wende- und Schmiereinrichtung auf die jeweilige Regalhöhe bewegt wird, von der ein erstes Käsebrett mit mehreren Käselaiben in die Vorrichtung aufgenommen und dabei die Oberseite der Käselaibe gebürstet wird. Die Vorrichtung hält ein zweites Käsebrett bereit, dem die Oberseiten der Käselaibe zugeführt werden. Die beiden beidseits der Käselaibe angeordneten Käsebretter und die Käselaibe werden in einem ersten Schritt um 90° um eine parallel zu den Längsachsen der Käsebretter verlaufende Achse gedreht. Die Käselaibe gelangen dadurch in eine Lage, bei der ihre Unter- und Oberseiten vertikal ausgerichtet sind. Die umlaufende Randfläche liegt in einem unteren Bereich auf einem Antriebsband auf. Bei runden Käselaiben kann das Antriebsband die Käselaibe in eine Drehung versetzen und dabei kann die Randflächen der runden Käselaibe gebürstet werden. Anschliessend werden die Käsebretter und die Käselaibe in einem zweiten Schritt um 90° um die parallel zu den Längsachsen der Käsebretter verlaufende Achse gedreht. Danach können die Käselaibe auf dem zweiten Käsebrett in das Regal geschoben werden.

Die Kombination des Wendens und Bürstens führt dazu, dass sich diese beiden Behandlungen gegenseitig unterbrechen und reduziert die Effizienz des Wendens und des Bürstens. Wenn junge, wenig gereifte Käselaibe für das Bürsten des Randes auf dem Rand aufliegend gedreht werden, können diese Käselaibe beschädigt werden, weil sie dazu noch nicht genügend stabil sind. Aufgrund möglicher Verformungen ist die Position der dem Rand, bzw. der Järbseite, der Käselaibe zugeordneten Bürsten nicht immer optimal.

CH677861A5 offenbart eine Vorrichtung zum Schmieren von quadratischen Käselaiben mittels einer in einem Traggestell gehaltenen, auf eine der Stirnseiten des Käselaibes einwirkenden Tellerbürste.

Die aus dem Stande der Technik bekannten Schmiervorrichtungen sind für das Schmieren der Järbseite von quadratischen Käsern nicht geeignet. Auch für runde Käselaibe mit unterschiedlichen Durchmessern ist keine Lösung beschrieben, mit der eine der Järbseite zugeordnete Randbürste genügend gut positioniert werden kann.

Die erfindungsgemässe Aufgabe besteht nun darin eine einfache Lösung zu finden, welche das Schmieren der Järbseite von runden und quadratischen Käselaiben optimal durchführbar macht.

Diese Aufgabe wird durch eine Schmiervorrichtung mit den Merkmalen des Anspruchs 1 gelöst. Die abhängigen Ansprüche beschreiben alternative bzw. vorteilhafte Ausführungsvarianten, welche weitere Aufgaben lösen.

Im Rahmen eines ersten erfinderischen Schrittes wurde erkannt, dass eine Schmiervorrichtung, die sowohl zum Schmieren von runden als auch quadratischen Käselaiben einsetzbar ist, zwei verschiedene Probleme gleichzeitig lösen muss. Die Schmiervorrichtung umfasst mindestens zwei Drehteller, wobei die im Wesentlichen vertikal ausgerichteten Drehachsen der mindestens zwei Drehteller auf einer Anordnungsachse nebeneinander angeordnet sind. Wenn quadratische Käselaibe auf nebeneinander angeordneten Drehtellern um die Drehachsen der jeweiligen Drehteller drehen, muss im Sinne des ersten zu lösenden Problems sicher gestellt werden, dass sich die Ecken der nebeneinander drehenden quadratischen Käselaibe nicht berühren.

Im Sinne des zweiten Problems muss zudem jede Randbürste radial zur Drehachse des jeweiligen Drehtellers so beweglich sein, dass ihr Abstand von der Drehachse immer an den Abstand angepasst ist, welcher bei der jeweiligen Drehausrichtung zwischen der Drehachse und dem der Randbürste zugewandten Bereich der Järbseite auftritt. Wenn eine Ecke des Käselaibs gegen die Randbürste gerichtet ist, muss der Abstand zwischen der Drehachse und der Randbürste am grössten sein. Wenn die Mitte einer der Seitenlinien des in der Draufsicht quadratischen Käselaibs gegen die Randbürste gerichtet ist, muss der Abstand zwischen der Drehachse und der Randbürste am kleinsten sein.

Der für das Drehen der nebeneinander angeordneten quadratischen Käselaibe benötigten Abstand zwischen den jeweiligen Drehachsen kann dann am kleinsten gewählt werden, wenn die Drehausrichtungen von benachbarten quadratischen Käselaiben um im Wesentlichen 45° verdreht gewählt werden und die Käselaibe gegensinnig gedreht werden. Dadurch ist eine beim Drehen gegen die benachbarte Drehachse gerichtet Ecke des einen Käselaibs gegen die Mitte zwischen zwei Ecken des benachbarten anderen Käselaibs gerichtet. Aufgrund der gegensinnigen Drehrichtungen bewegen sich einander zugewandte Ecken und Mitten miteinander über die Anordnungsachse, dann voneinander weg und schliesslich wieder aufeinander zu.

Wenn Käselaibe gegensinnig um benachbarte Drehachsen drehen, so treffen von den Drehachsen ausgehende Richtungsachsen, die in der Draufsicht orthogonal zur Anordnungsachse stehen, bei einem Käselaib beispielsweise eine Ecke und beim anderen den Mittelbereich zwischen zwei Ecken. In der Richtung dieser Richtungsachsen sind somit die Abstände der Järbseiten von den jeweiligen Drehachsen unterschiedlich gross. Das Drehen der Käselaibe führt beim Käselaib mit der vorstehenden Ecke zu einer Abnahme des Abstandes und beim anderen Käselaib zu einer Zunahme des Abstandes. Wenn die Randbürsten ausgehend von den Drehachsen in der Richtung orthogonal zur Anordnungsachse angeordnet und bewegt werden, müssen die Abstände der Randbürsten bei beiden benachbarten Drehachsen zu gleichen Zeiten unterschiedlich gross sein und auch unterschiedlich geändert werden.

In einem zweiten erfinderischen Schritt wurde erkannt, dass es für die Randbürsten vier Bewegungslinien gibt, auf denen die Abstände der Järbseiten von den jeweiligen Drehachsen bei zwei benachbarten gegenläufig drehenden Käselaiben zu jedem Zeitpunkt der Drehung gleich gross sind. Zwischen der Anordnungsachse und diesen Bewegungslinien sind Winkel von 22.5° oder 67.5° im Uhrzeiger oder im Gegenuhrzeigersinn ausgebildet. Die Bewegungslinien, welche zur Anordnungsachse lediglich um einen Winkel von 22.5° verdreht sind, eignen sich nicht für die Anordnung der Randbürsten, weil die Randbürsten bei diesen kleinen Winkeln zu nahe bei der Anordnungsachse positioniert sein müssten, was nicht möglich ist, wenn dort benachbarte Käselaibe angeordnet sind. Die Bewegungslinien, welche zur Anordnungsachse um einen Winkel von 67.5° verdreht sind, eignen sich für die Anordnung der Randbürsten, weil die Randbürsten bei diesen Winkeln genügend weit von der Anordnungsachse weg positioniert sind und von benachbarten Käselaiben einen genügend grossen Abstand haben.

Vorteilhafte Bewegungsbereiche für die Randbürsten erstrecken sich entlang der Bewegungslinien, die mit einem bei der jeweiligen Drehachse ausgebildeten Winkel von 67.5° zur Anordnungsachse verlaufen. Dabei erstrecken sich die Bewegungsbereiche beidseits der Bewegungslinien über einen Abstand von maximal 20mm, vorzugsweise von maximal 5mm, insbesondere von maximal 3mm, von der jeweiligen Bewegungslinie und weisen somit eine Breite von maximal 40mm, vorzugsweise von maximal 10mm, insbesondere von maximal 6mm auf. Innerhalb der Bewegungsbereiche können die den Drehachsen bzw. Käselaiben zugeordneten Randbürsten beim gegensinnigen Drehen der direkt nebeneinander angeordneten Käselaibe gemeinsam auf die jeweilige Drehachse zubewegt und von dieser wegbewegt werden. Dabei sind die Abstände zwischen den Drehachsen und den zugeordneten Randbürsten zu jedem Zeitpunkt bei allen Käselaiben im Wesentlichen gleich gross und bei jedem Käselaib ist die zugeordnete Randbürste für das Schmieren in der optimalen Position.

Die bei der Definition der Bewegungsbereiche angegebenen Abstände beidseits der Bewegungslinien gewährleisten immer noch optimale Positionen der Randbürsten, weil die Randbürsten so ausgebildet sind, dass für das Schmieren der Järbseiten der Abstand zwischen der Drehachse der Randbürste und dem zu schmierenden Bereich der Järbseite in einem vorgebbaren Bereich liegen muss.

Die für quadratische Käselaibe geeignete Bewegung der Randbürsten in Bewegungsbereichen entlang einer Bewegungslinie mit einem bei der jeweiligen Drehachse ausgebildeten Winkel von 67.5° zur Anordnungsachse eignen sich auch zum Positionieren der Randbürsten entsprechend dem jeweiligen Durchmesser von runden Käselaiben.

Die erfindungsgemässe Schmiervorrichtung zum Schmieren der Järbseiten von Käselaiben umfasst mindestens zwei entlang einer Anordnungsachse in Abständen angeordnete, um Drehtellerachsen drehbare Drehteller. Den Drehtellern bzw. Drehtellerachsen sind je Randbürsten zugeordnet, die verstellbar mit einer Trageinrichtung verbunden sind und an die Järbseiten der auf den Drehtellern angeordneten Käselaibe anlegbar sind. Die Randbürsten sind miteinander je innerhalb von Bewegungsbereichen entlang von Bewegungslinien auf die je zugeordnete Drehtellerachse hin und davon weg bewegbar. Die Bewegungslinien verlaufen von der jeweiligen Drehachse aus unter einem Winkel von 67.5° zur Anordnungsachse. Die Bewegungsbereiche erstrecken sich beidseits der Bewegungslinien über einen Abstand von maximal 20mm, vorzugsweise von maximal 5mm, insbesondere von maximal 3mm, und weisen somit eine Breite von maximal 40mm, vorzugsweise von maximal 10mm, insbesondere von maximal 6mm auf.

Gemäss einer vorteilhaften Ausführungsform sind die Randbürsten an einem gemeinsamen Träger angeordnet. Für die Bewegung der Randbürsten innerhalb der Bewegungsbereiche entlang der Bewegungslinien wird der Träger von einem Verstellantrieb in paralleler Ausrichtung bewegt. Die Bewegung des Trägers unter Beibehaltung dessen Ausrichtung erfolgt im Wesentlichen in Richtung der Bewegungslinien, so dass die Bewegung des Trägers sicherstellt, dass die daran angeordneten Randbürsten innerhalb der Bewegungsbereiche entlang der Bewegungslinien bewegt werden.

Eine parallele Verschiebung des Trägers könnte mit Linearführungen erzielt werden. Die Schmiervorrichtung wird in Nassbereichen eingesetzt und beim Schmieren wird Abrieb über die Schmiervorrichtung verteilt. Zudem wird die Vorrichtung Säure und Lauge ausgesetzt. Bei diesen Belastungen der Vorrichtung würden Präzisionsführungen schnell zu Problemen führen.

Eine vorteilhafte Ausführungsform vermeidet die von Präzisionsführungen ausgehenden Probleme, indem der gemeinsame Träger über eine verstellbare Parallelogramm-Verbindung mit der Trageinrichtung verbunden ist. Die Parallelogramm-Verbindung umfasst zwei Arme und zwei Glieder, wobei die Arme und die Glieder an den Eckpunkten eines Parallelogramms um Schwenkachsen schwenkbar miteinander verbunden sind. Zwei Schwenkachsen sind an der Trageinrichtung und zwei Schwenkachsen sind am Träger angeordnet sind.

Bei der mit der Parallelogramm-Verbindung erzielten Bewegung des Trägers ist der Träger in allen Positionen immer parallel ausgerichtet. Die Schwenkachsen des Trägers bewegen sich auf kurzen Kreissegmenten um Schwenkachsen der Trageinrichtung. Die Zentren der Randbürsten führen die gleichen Bewegungen aus. Damit die Randbürsten bei diesen Bewegungen je innerhalb der Bewegungsbereiche entlang der Bewegungslinien verbleiben, werden die Arme genügend gross gewählt. Vorzugsweise haben sie eine Länge, die mindestens dem Zentrumsabstand zwischen zwei benachbarten Randbürsten entspricht. Zudem wird die Parallelogramm-Verbindung so ausgelegt, dass der Winkel zwischen den Armen und der Anordnungsachse bei einer mittleren Schwenkausrichtung der Arme bei im Wesentlichen 22.5° liegt. Die damit für die Bewegung der Randbürsten eingesetzten Kreissegmente sind gute Annäherungen an die optimalen Bewegungslinien.

Kleine Abweichungen von den optimalen Bewegungslinien wirken sich bei der Verwendung gängiger Randbürsten nicht negativ auf das Schmieren der Järbflächen aus. Die gängigen Randbürsten haben lange Borsten, die auch bei leicht unterschiedlichen Abständen zwischen der Drehachse der Randbürste und dem zu behandelnden Bereich der Järbseite eine optimale Schmierung gewährleisten.

Bei einer vorteilhaften Ausführungsform wird mindestens ein Arm der Parallelogramm-Verbindung vom Verstellantrieb um eine Schwenkachse so geschwenkt, dass die Randbürsten bei der jeweiligen Drehlage der Käselaibe optimal mit der Järbseite der jeweiligen Käselaibe in Kontakt sind. Um diesen mindestens einen Arm problemlos bewegen zu können, ist zumindest bei einer Schwenkachse eine Welle eingesetzt. An dieser Welle ist der Arm drehfest befestigt und der Verstellantrieb kann die mindestens eine Welle drehen.

Vorzugsweise wird zum Drehen der mindestens einen Welle eine Betätigungs-Verbindung zwischen dem Verstellantrieb und der mindestens einen Welle eingesetzt, welche eine Stange und mindestens eine Kurbel umfasst. Die mindestens eine Kurbel ist bei einem Ende mit der mindestens einen Welle und beim anderen Ende mit der Stange verbunden. Der Verstellantrieb kann nun mit einer Verschiebung der Stange über die mindestens eine Kurbel die mindestens eine Welle und den mindestens einen Arm bewegen.

Die Randbürsten sind um ihre zentrale Bürstenachse drehbar am Träger angeordnet. Am Träger ist mindestens ein Drehantrieb zum Drehen der mindestens zwei Randbürsten angeordnet. In einer vorteilhaften Ausführung hat jede Randbürste einen eigenen Drehantrieb. Dadurch kann auf eine Übertragung des Drehantriebs verzichtet werden.

Die oszillierenden Bewegungen des Trägers mit den Randbürsten und deren Drehantrieben können aufgrund von Beschleunigungsspitzen und Bremsspitzen zu Vibrationen von Vorrichtungsteilen führen. Um solche Vibrationen zu dämpfen kann eine Dämpfungseinrichtung mit der Trageinrichtung und über eine Verbindung mit mindestens einer Randbürste verbunden werden.

Damit gleichzeitig mit dem Schmieren der Järbseiten auch das Schmieren der Oberseiten der mindesten zwei Käselaibe durchgeführt werden kann, sind an der Trageinrichtung auch mindestens zwei Tellerbürsten angeordnet, welche zum Schmieren an die Oberflächen der Käseleibe anpressbar sind. Die Drehteller und die Tellerbürsten sind so relativ zueinander positioniert, dass die Oberseite eines auf dem Drehteller angeordneten Käselaibs von der Tellerbürste in einem von der Järbseite bis über die Mitte der Oberfläche hinausgehenden Bereich überstreichbar ist.

Damit die Oberseiten und die Järbseiten von den Tellerbürsten und den Randbürsten auch unter Zuführung von Flüssigkeit geschmiert werden können, sind zu beiden Bürsten Zuführung für Flüssigkeit angeordnet. Während der Käselaib auf dem Drehteller dreht, schmiert die Tellerbürste mit einer vorgebbaren Anpresskraft die Käseoberfläche und die Randbürste mit an den Käserand angepasster Position die Järbseite.

Die erfindungsgemässe Schmiervorrichtung wird in einer Vorrichtung zum Behandeln von Käselaiben vorzugsweise zusammen mit einer Wendeeinrichtung eingesetzt. Solche Behandlungsvorrichtungen umfassen zudem eine Zuführeinrichtung und eine Übergabeeinrichtung. Die Zuführeinrichtung macht mindestens zwei auf einem Käsebrett entlang einer Anordnungsachse nebeneinander angeordnete Käselaibe der Wendeeinrichtung zuführbar. Die gewendeten Käselaibe werden von der Übergabeeinrichtung an eine erfindungsgemässe Schmiervorrichtung übergeben. Die geschmierten Käselaibe werden von der Übergabeeinrichtung auf ein Käsebrett gebracht, auf dem sie dann beispielsweise zu einem Lagerplatz gebracht werden. Eine vorteilhafte Behandlungsvorrichtung umfasst eine Fördereinrichtung zum Fördern von Käsebrettern mit Käselaiben zwischen Lagerplätzen und der Zuführeinrichtung bzw. der Übergabeeinrichtung.

Anhand der Figuren wird die Erfindung im Folgenden näher beschrieben. Dabei zeigen
- Figur 1: eine schematische Draufsicht auf drei Randbürsten und drei quadratische Käselaibe vor dem Drehen,
- Figur 2: eine schematische Draufsicht auf drei Randbürsten und drei quadratische Käselaibe nach dem Drehen um 22.5°,
- Figur 3: eine schematische Draufsicht auf drei Randbürsten und drei quadratische Käselaibe nach dem Drehen um 67.5°,
- Figur 4: eine perspektivische Darstellung einer Schmiervorrichtung mit drei Randbürsten,
- Figur 5: eine Draufsicht auf eine Schmiervorrichtung mit drei Randbürsten.

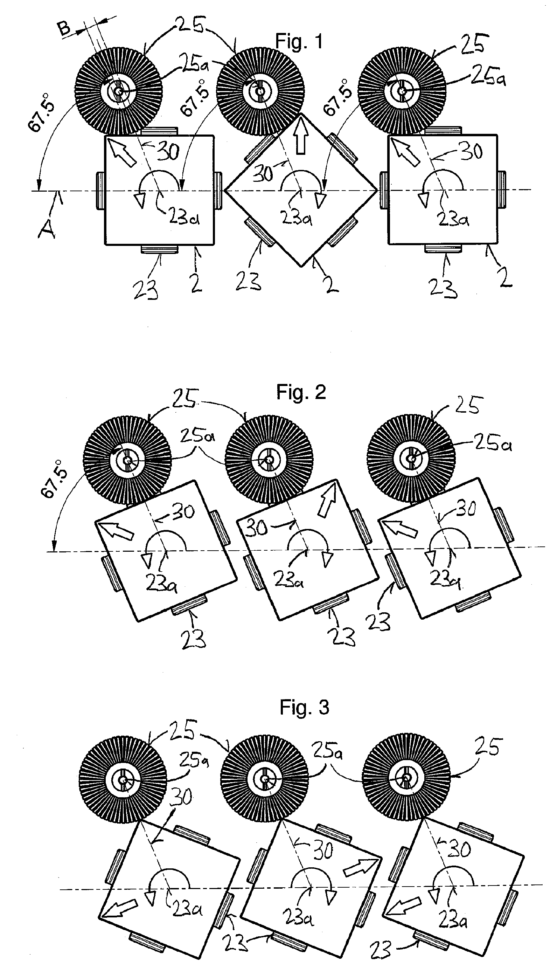

Die Figuren 1 bis 3 veranschaulichen die Drehbewegungen von drei entlang einer Anordnungsachse A nebeneinander auf Drehtellern 23 angeordneten quadratischen Käselaiben 2 und die passenden Positionen von Randbürsten 25. Die Käselaibe 2 können von den Drehtellern 23 um Drehtellerachsen 23a gedreht werden. Die Käselaibe 2 sind so auf die Drehteller 23 aufgelegt, dass die Drehtellerachsen 23a im Wesentlichen durch die Mittelpunkte der Käselaibe 2 führen. Der in der Mitte angeordnete Käselaib 2 ist gegenüber den beiden seitlich angeordneten Käselaiben um 45° verdreht. Ausgehend von der in Fig. 1 dargestellten Situation beginnen die Drehteller 23 zu drehen, wobei der mittlere Drehteller 23 im Uhrzeigersinn und die beiden seitlichen Drehteller 23 im Gegenuhrzeigersinn drehen. Somit drehen benachbarte Käselaibe 2 je in entgegengesetzten Richtungen. Mit der dargestellten Anordnung ist der für das Drehen der nebeneinander angeordneten quadratischen Käselaibe 2 benötigten Abstand zwischen den jeweiligen Drehtellerachsen 23a minimal.

Bei der in Fig. 1 dargestellten Situation sind Ecken des mittleren Käselaibs 2 gegen Mitten zwischen zwei Ecken der benachbarten Käselaibe 2 gerichtet. In der Figur 2 sind die Käselaibe 2 der Figur 1 nach einer Drehung der Drehteller um 22.5° dargestellt. Aufgrund der gegensinnigen Drehrichtungen bewegen sich einander zugewandte Ecken und Mitten miteinander von der Anordnungsachse A weg. Nach dem Weiterdrehen um 22.5° sind Ecken der aussen platzierten Käselaibe gegen den inneren Käselaib 2 gerichtet, wobei beim inneren Käselaib 2 zwischen Ecken verlaufende Mitten gegen die je äusseren Käselaibe gerichtet sind.

In den Figuren 1 bis 3 ist jedem Drehteller 23 und dessen Drehtellerachse 23a eine Randbürste 25 zugeordnet, die an die Järbseite des jeweiligen Käselaibs 2 anliegt. Die Randbürsten 25 sind je um Randbürstenachsen 25a drehbar. Wenn eine Ecke eines Käselaibs 2 gegen eine Randbürste gerichtet ist (Fig. 3), so muss die Randbürste 25 bzw. ihre Randbürstenachse 25a einen grösseren Abstand von der Drehtellerachse 25a haben, als wenn ein Bereich zwischen zwei Ecken gegen die Randbürste 25 gerichtet ist (Fig. 2). Entsprechend müssen die Randbürsten 25 beim Drehen der Käselaibe 2 auf die Drehtellerachsen 25a zubewegt und von dieser wegbewegt werden.

Für die Bewegung der Randbürsten 25 sind die Bewegungslinien 30 besonders geeignet. Zwischen der Anordnungsachse A und den geeigneten Bewegungslinien 30 sind Winkel von 67.5° im Uhrzeiger oder im Gegenuhrzeigersinn ausgebildet. Die geeigneten Bewegungslinien führen in einem genügend grossen Winkel zur Anordnungsachse A von den Drehtellern 23, bzw. von den Käselaiben 2, weg in Bereiche, welche für die Randbürsten 23 genügend Platz bieten. Entlang der geeigneten Bewegungslinien 30 sind die Abstände der Järbseiten von den jeweiligen Drehtellerachsen 23a bei allen nebeneinander angeordneten Käselaiben 2 zu jedem Zeitpunkt der Drehung gleich gross. Wenn die Randbürsten 25 entlang der geeigneten Bewegungslinien 30 auf die Drehtellerachsen 23a zubewegt und von diesen wegbewegt werden, können alle Randbürsten gleich bewegt werden. Die Randbürsten können daher an einem gemeinsamen Träger angeordnet und miteinander bewegt werden.

Die Randbürsten 25 sind so ausgebildet, dass für das optimale Schmieren der Järbseiten der Abstand zwischen der Drehachse der Randbürste und dem zu schmierenden Bereich der Järbseite in einem vorgebbaren Arbeits-Bereich liegen kann. Entsprechend diesem Arbeits-Bereich können die Randbürsten 25 auch in einem kleinen Abstand zu den Bewegungslinien 30 immer eine optimale Schmierung gewährleisten.

Vorteilhafte Bewegungsbereiche B für die Randbürsten 25 erstrecken sich entlang der Bewegungslinien 30. Dabei erstrecken sich die Bewegungsbereiche beidseits der Bewegungslinien über einen Abstand von maximal 20mm, vorzugsweise von maximal 5mm, insbesondere von maximal 3mm, und weisen somit eine Breite (B) von maximal 40mm, vorzugsweise von maximal 10mm, insbesondere von maximal 6mm auf. Innerhalb der Bewegungsbereiche B können die Randbürsten 25 beim gegensinnigen Drehen der direkt nebeneinander angeordneten Käselaibe 2 gemeinsam auf die jeweilige Drehtellerachse 23a zubewegt und von dieser wegbewegt werden.

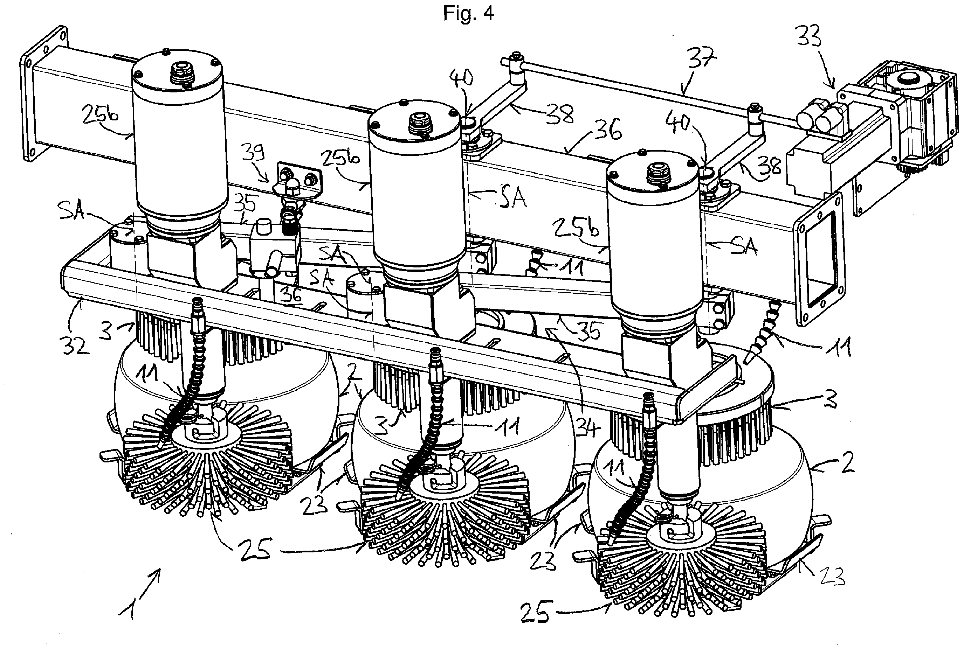

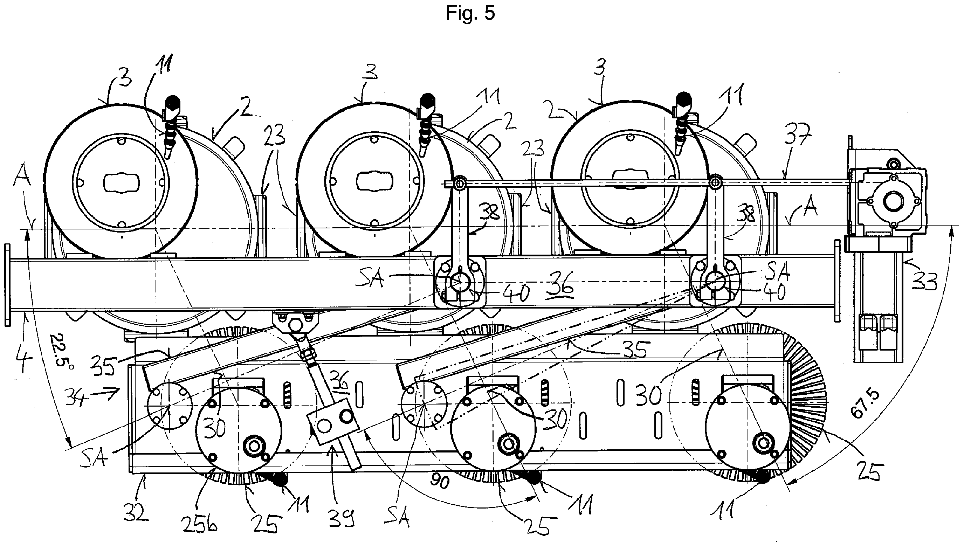

Die Figuren 4 und 5 zeigen eine Schmiervorrichtung 1 mit drei Randbürsten 25, die an einem gemeinsamen Träger 32 angeordnet sind. Für die Bewegung der Randbürsten 25 wird der Träger 32 von einem Verstellantrieb 33 in paralleler Ausrichtung bewegt. Die parallele Bewegung des Trägers 32 ist im Wesentlichen entlang der anhand der Figuren 1 bis 3 dargestellten Bewegungslinien 30 ausgerichtet, so dass die Verschiebung des Trägers sicherstellt, dass die daran angeordneten Randbürsten 25 innerhalb der Bewegungsbereiche B bewegt werden.

Der Träger 32 ist über eine verstellbare Parallelogramm-Verbindung 34 mit einer Trageinrichtung 4 verbunden. Die Parallelogramm-Verbindung 34 umfasst zwei Arme 35 und zwei Glieder 36, wobei die Arme 35 und die Glieder 36 an den Eckpunkten eines Parallelogramms um Schwenkachsen SA schwenkbar miteinander verbunden sind. Zwei Schwenkachsen SA sind an der Trageinrichtung 4 und zwei Schwenkachsen SA sind am Träger 32 angeordnet.

Bei der mit der Parallelogramm-Verbindung erzielten Bewegung des Trägers 32 ist der Träger 32 in allen Positionen immer parallel ausgerichtet. Die Schwenkachsen SA des Trägers 32 bewegen sich auf kurzen Kreissegmenten um die Schwenkachsen SA der Trageinrichtung 4. Die Arme 35 sind so lang, dass die Randbürstenachsen 25a bei den Bewegungen des Trägers 32 innerhalb der Bewegungsbereiche B verbleiben. Die Parallelogramm-Verbindung 34 ist zudem so ausgelegt, dass der Winkel zwischen den Armen 35 und der Anordnungsachse A bei einer mittleren Schwenkausrichtung der Arme 35 bei im Wesentlichen 22.5° liegt. Die damit für die Bewegung der Randbürsten 25 eingesetzten Kreissegmente sind gute Annäherungen an die optimalen Bewegungslinien 30.

In der dargestellten Ausführungsform werden beide Arme 35 der Parallelogramm-Verbindung 34 vom Verstellantrieb 33 bewegt. Dazu ist bei beiden Schwenkachsen SA der Trageinrichtung 4 eine Welle 40 eingesetzt. An jeder Welle 40 ist einer der Arme 35 drehfest befestigt und der Verstellantrieb 33 kann die Wellen 40 drehen. Zum Drehen der Wellen 40 ist eine Betätigungs-Verbindung zwischen dem Verstellantrieb 33 und den Wellen 40 eingesetzt, welche eine Stange 37 und zwei Kurbeln 38 umfasst. Die Kurbeln 38 sind bei einem Ende mit einer der Wellen 40 und beim anderen Ende mit der Stange 37 verbunden. Der Verstellantrieb 33 kann nun mit einer Verschiebung der Stange 37 über die Kurbeln 38 die Wellen 40 und damit die Arme 35 bewegen.

Die Randbürsten 25 sind um ihre Bürstenachsen drehbar am Träger 32 angeordnet. In der dargestellten Ausführungsform umfasst jede Randbürste 25 einen am Träger 32 befestigten Drehantrieb 25b.

Die oszillierenden Bewegungen des Trägers 32 mit den Randbürsten 25 und deren Drehantrieben 25b können aufgrund von Beschleunigungsspitzen und Bremsspitzen zu Vibrationen von Vorrichtungsteilen führen. Um solche Vibrationen zu dämpfen ist eine Dämpfungseinrichtung 39 zwischen der Trageinrichtung 4 und dem Träger 32 eingesetzt.

Damit gleichzeitig mit dem Schmieren der Järbseiten auch das Schmieren der Oberseiten der Käselaibe durchgeführt werden kann, sind in einer vorteilhaften Ausführungsform an der Trageinrichtung 4 auch drei Tellerbürsten 3 angeordnet, welche zum Schmieren an die Oberflächen der Käseleibe anpressbar sind. Die Käselaibe werden beim Schmieren auf Drehtellern 23 gedreht.

Damit die Oberseiten und die Järbseiten von den Tellerbürsten 3 und den Randbürsten 25 auch unter Zuführung von Flüssigkeit geschmiert werden können, sind Zuführungen 11 für Flüssigkeit eingesetzt.

## Patentansprüche

1. Schmiervorrichtung (1) zum Schmieren der Järbseiten von Käselaiben (2) mit mindestens zwei entlang einer Anordnungsachse (A) in Abständen angeordneten, um Drehtellerachsen (23a) drehbaren Drehtellern (23) und mit mindestens zwei Randbürsten (25), von denen jede einem Drehteller (23) und dessen Drehtellerachse (23a) zugeordnet ist, die verstellbar mit einer Trageinrichtung (4) verbunden sind und an die Järbseiten der auf den Drehtellern (23) angeordneten Käselaibe (2) anlegbar sind, **dadurch gekennzeichnet, dass** die Randbürsten (25) miteinander je innerhalb von Bewegungsbereichen (B) entlang von Bewegungslinien (30) auf die je zugeordnete Drehtellerachse (23a) hin und davon weg bewegbar sind, wobei die Bewegungslinien (30) von der jeweiligen Drehachse (23a) aus unter einem Winkel von 67.5° zur Anordnungsachse (A) verlaufen.

2. Schmiervorrichtung (1) nach Anspruch 1, **dadurch gekennzeichnet, dass** die Randbürsten (25) an einem gemeinsamen Träger (32) angeordnet sind und dass für die Bewegung der Randbürsten (25) innerhalb der Bewegungsbereiche (B) entlang der Bewegungslinien (30) ein Verstellantrieb (33) den Träger (32) in paralleler Ausrichtung verschiebbar macht.

3. Schmiervorrichtung (1) nach Anspruch 2, **dadurch gekennzeichnet, dass** der gemeinsame Träger (32) über eine verstellbare Parallelogramm-Verbindung (34) mit der Trageinrichtung (4) verbunden ist.

4. Schmiervorrichtung (1) nach Anspruch 3, **dadurch gekennzeichnet, dass** die Parallelogramm-Verbindung (34) zwei Arme (35) und zwei Glieder (36) umfasst, wobei die Arme (35) und die Glieder (36) an den Eckpunkten eines Parallelogramms um Schwenkachsen (SA) schwenkbar miteinander verbunden sind und zwei Schwenkachsen (SA) an der Trageinrichtung (4) sowie zwei Schwenkachsen (SA) am Träger (32) angeordnet sind.

5. Schmiervorrichtung (1) nach Anspruch 4, **dadurch gekennzeichnet, dass** die zwei Arme (35) der Parallelogramm-Verbindung (34) zwischen den Schwenkachsen (SA) eine Länge haben, die mindestens dem Abstand zwischen den Randbürstenachsen (23a) zweier benachbarter Randbürsten (25) entspricht, und die zwei Arme (35) in einer für das Schmieren mittleren Schwenkausrichtung einen Winkel von 22.5° zur Anordnungsachse (A) aufweisen.

6. Schmiervorrichtung (1) nach Anspruch 4 oder 5, **dadurch gekennzeichnet, dass** mindestens ein Arm (35) der Parallelogramm-Verbindung (34) vom Verstellantrieb (33) um eine Schwenkachse (SA) schwenkbar ist.

7. Schmiervorrichtung (1) nach Anspruch 4 oder 5, **dadurch gekennzeichnet, dass** zumindest bei einer Schwenkachse (SA) eine Welle (40) eingesetzt ist, wobei an der mindestens einen Welle (40) ein Arm (35) drehfest befestigt ist und der Verstellantrieb (33) die mindestens eine Welle (40) drehbar macht.

8. Schmiervorrichtung (1) nach Anspruch 7, **dadurch gekennzeichnet, dass** eine Betätigungs-Verbindung zwischen dem Verstellantrieb (33) und der mindestens einen Welle (40) eine Stange (37) und mindestens eine Kurbel (38) umfasst, wobei die mindestens eine Kurbel (38) bei einem Ende mit der mindestens einen Welle (40) und beim anderen Ende mit der Stange (37) verbunden ist, so dass der Verstellantrieb (33) mit einer Verschiebung der Stange (37) über die mindestens eine Kurbel (38) die mindestens eine Welle (40) und den mindestens einen Arm (35) bewegen kann.

9. Schmiervorrichtung (1) nach einem der Ansprüche 2 bis 8, **dadurch gekennzeichnet, dass** am Träger (32) mindestens ein Drehantrieb (25b) zum Drehen der mindestens zwei Randbürsten (25) angeordnet ist.

10. Schmiervorrichtung (1) nach einem der Ansprüche 2 bis 9, **dadurch gekennzeichnet, dass** eine Dämpfungseinrichtung (39) mit der Trageinrichtung (4) und über eine Verbindung mit mindestens einer Randbürste (25) verbunden ist, so dass Beschleunigungsspitzen und Bremsspitzen nicht zu unerwünschten, starken Vibrationen an der Schmiervorrichtung (1) führen.

11. Schmiervorrichtung (1) nach einem der Ansprüche 1 bis 10, **dadurch gekennzeichnet, dass** sich die Bewegungsbereiche (B) beidseits der Bewegungslinien (30) über einen Abstand von maximal 20mm, vorzugsweise von maximal 5mm, insbesondere von maximal 3mm erstrecken und somit eine Breite von maximal 40mm, vorzugsweise von maximal 10mm, insbesondere maximal 6mm aufweisen.

12. Schmiervorrichtung (1) nach einem der Ansprüche 1 bis 11, **dadurch gekennzeichnet, dass** an der Trageinrichtung (4) mindestens zwei Tellerbürsten (3) angeordnet sind, welche zum Schmieren an die Oberflächen der Käseleibe (2) anpressbar sind.

## Claims

1. A smearing device (1) for smearing the heels of whole cheeses (2), with at least two rotary disks (23) that are arranged at distances along an arrangement axis (A) and are rotatable about rotary disk axes (23a) and
with at least two edge brushes (25), each of which is assigned to a rotary disk (23) and its rotary disk axis (23a) and which are adjustably connected to a support apparatus (4) and can be applied to the heels of the whole cheeses (2) arranged on the rotary disks (23), **characterized in that** each of the edge brushes (25) are movable together toward and away from the assigned rotary disk axis (23a) within movement ranges (B) along movement lines (30), wherein the movement lines (30) extend from the relevant rotary axis (23a) at an angle of 67.5° to the arrangement axis (A).

2. The smearing device (1) according to Claim 1, **characterized in that** the edge brushes (25) are arranged on a common carrier (32) and **in that**, for moving the edge brushes (25) within the movement ranges (B) along the movement lines (30), an adjustment drive (33) makes the carrier (32) displaceable in the parallel orientation.

3. The smearing device (1) according to Claim 2, **characterized in that** the common carrier (32) is connected to the support apparatus (4) by means of an adjustable parallelogram coupling (34).

4. The smearing device (1) according to Claim 3, **characterized in that** the parallelogram coupling (34) comprises two arms (35) and two links (36),
wherein the arms (35) and the links (36) are interconnected at the corner points of a parallelogram so as to be pivotable about pivot axes (SA) and two pivot axes (SA) are arranged on the support apparatus (4) and two pivot axes (SA) are arranged on the carrier (32).

5. The smearing device (1) according to Claim 4, **characterized in that** the two arms (35) of the parallelogram coupling (34) between the pivot axes (SA) have a length that corresponds at least to the distance between the edge brush axes (23a) of two adjacent edge brushes (25), and
the two arms (35) have an angle of 22.5° to the arrangement axis (A) in an average pivot orientation for the smearing.

6. The smearing device (1) according to Claim 4 or 5, **characterized in that** at least one arm (35) of the parallelogram coupling (34) is pivotable about a pivot axis (SA) by the adjustment drive (33).

7. The smearing device (1) according to Claim 4 or 5, **characterized in that** a shaft (40) is inserted at least in one pivot axis (SA), wherein an arm (35) is rotatably fastened to the at least one shaft (40) and the adjustment drive (33) makes the at least one shaft (40) rotatable.

8. The smearing device (1) according to Claim 7, **characterized in that** an actuation coupling between the adjustment drive (33) and the at least one shaft (40) comprises a rod (37) and at least one crank (38), wherein the at least one crank (38) is connected to the at least one shaft (40) at one end and to the rod (37) at the other end, such that the adjustment drive (33) can move the at least one shaft (40) and the at least one arm (35) by a displacement of the rod (37) by means of the at least one crank (38).

9. The smearing device (1) according to any one of Claims 2 to 8, **characterized in that** at least one rotary drive (25b) is arranged on the carrier (32) for rotating the at least two edge brushes (25).

10. The smearing device (1) according to any one of Claims 2 to **characterized in that** a damping apparatus (39) is connected to the support apparatus (4) and by a coupling to at least one edge brush (25), such that acceleration peaks and braking peaks do not lead to undesired strong vibrations on the smearing device (1).

11. The smearing device (1) according to any one of Claims 1 to 10, **characterized in that** the movement ranges (B) extend on both sides of the movement lines (30) over a distance of at most 20 mm, preferably at most 5 mm, in particular at most 3 mm, and therefore have a width of at most 40 mm, preferably at most 10 mm, in particular at most 6 mm.

12. The smearing device (1) according to any one of Claims 1 to 11, **characterized in that** at least two disk brushes (3), which can be pressed against the surfaces of the whole cheeses (2) for smearing, are arranged on the support apparatus (4).

## Revendications

1. Dispositif de lavage (1) pour le lavage des talons des fromages entiers (2) avec au moins deux plateaux rotatifs (23) disposés à intervalles le long d'un axe d'arrangement (A), pouvant tourner sur des axes de plateaux rotatifs (23a), et
avec au moins deux brosses de pourtour (25), chacune d'entre elles étant attribuée à un plateau rotatif (23) et à son axe de plateau rotatif (23a), lesquelles sont reliées de façon réglable à un dispositif support (4) et peuvent être appliquées sur les talons des fromages entiers (2) disposées sur les plateaux rotatifs (23), **caractérisé en ce que** les brosses de pourtour (25) peuvent être chacune déplacées ensemble vers et depuis l'axe de plateau rotatif (23a) attribué respectivement, au sein de zones de déplacement (B) le long de lignes de déplacement (30), les lignes de déplacement (30) s'étendant de l'axe de rotation (23a) respectif avec un angle de 67,5° par rapport à l'axe d'arrangement (A).

2. Dispositif de lavage (1) selon la revendication 1, **caractérisé en ce que** les brosses de pourtour (25) sont disposées sur un support commun (32) et **en ce qu'**un entraînement de réglage (33) permet au support (32) de se déplacer dans une orientation parallèle, pour le mouvement des brosses de pourtour (25) au sein des zones de déplacement (B) le long des lignes de déplacement (30).

3. Dispositif de lavage (1) selon la revendication 2, **caractérisé en ce que** le support commun (32) est relié avec le dispositif support (4) par une liaison en parallélogramme (34) réglable.

4. Dispositif de lavage (1) selon la revendication 3, **caractérisé en ce que** la liaison en parallélogramme (34) comprend deux bras (35) et deux membres (36),
les bras (35) et les membres (36) étant reliés les uns aux autres de façon pivotante sur des axes de pivotement (SA), aux angles d'un parallélogramme, deux axes de pivotement (SA) étant disposés sur le dispositif support (4) et deux axes de pivotement (SA) étant disposés sur le support (32).

5. Dispositif de lavage (1) selon la revendication 4, **caractérisé en ce que** les deux bras (35) de la liaison en parallélogramme (34) entre les axes de pivotement (SA) ont une longueur qui correspond au minimum à la distance entre les axes de brosses de pourtour (23a) de deux brosses de pourtour (25) voisines, et
les deux bras (35) présentent un angle de 22,5° avec l'axe d'arrangement (A), dans une orientation de pivotement moyenne pour le lavage.

6. Dispositif de lavage (1) selon la revendication 4 ou 5, **caractérisé en ce que** l'au moins un bras (35) de la liaison en parallélogramme (34) peut pivoter sur un axe de pivotement (SA), par l'entraînement de réglage (33).

7. Dispositif de lavage (1) selon la revendication 4 ou 5, **caractérisé en ce qu'**un arbre (40) est inséré au moins dans un axe de pivotement (SA), un bras (35) étant fixé de façon solidaire en rotation sur l'au moins un arbre (40) et l'entraînement de réglage (33) permettant à l'au moins un arbre (40) de pivoter.

8. Dispositif de lavage (1) selon la revendication 7, **caractérisé en ce qu'**une liaison d'actionnement entre l'entraînement de réglage (33) et l'au moins un arbre (40) comprend une tige (37) et au moins une bielle (38), l'au moins une bielle (38) étant reliée par une extrémité avec l'au moins un arbre (40) et par l'autre extrémité avec la tige (37), de telle sorte que l'entraînement de réglage (33) peut déplacer l'au moins un arbre (40) et l'au moins un bras (35) par un déplacement de la tige au moyen de l'au moins une bielle (38).

9. Dispositif de lavage (1) selon l'une quelconque des revendications 2 à 8, **caractérisé en ce qu'**au moins un entraînement rotatif (25b) est disposé sur le support (32), pour la rotation des au moins deux brosses de pourtour (25).

10. Dispositif de lavage (1) selon l'une quelconque des revendications 2 à 9, **caractérisé en ce qu'**un dispositif d'amortissement (39) est relié avec le dispositif support (4) et, par une liaison, avec au moins une brosse de pourtour (25), de telle sorte que les pics d'accélération et les pics de freinage n'entraînent pas des vibrations fortes non désirées sur le dispositif de lavage (1).

11. Dispositif de lavage (1) selon l'une quelconque des revendications 1 à 10, **caractérisé**
**en ce que** les zones de déplacement (B) s'étendent des deux côtés des lignes de déplacement (30) sur une distance de 20 mm au maximum, de préférence de 5 mm au maximum, en particulier de 3 mm au maximum, et présentent ainsi une largeur de 40 mm au maximum, de préférence de 10 mm au maximum, en particulier de 6 mm au maximum.

12. Dispositif de lavage (1) selon l'une quelconque des revendications 1 à 11, **caractérisé en ce qu'**au moins deux brosses circulaires (3) sont disposées sur le dispositif support (4), lesquelles peuvent être pressées sur les surfaces des fromages entier (2) pour le lavage.
